# EUROPÄISCHE PATENTSCHRIFT

(11) **EP 3 420 009 B1**
(45) Veröffentlichungstag und Bekanntmachung des Hinweises auf die Patenterteilung: **07.04.2021**
(21) Anmeldenummer: 17709005.7
(22) Anmeldetag: 22.02.2017
(51) Int. Cl.: C08G 18/48, C08G 18/73, C08G 18/76, C08G 18/08, C08G 18/24, C08G 18/40, C08G 18/42

(54) **VERFAHREN ZUR HERSTELLUNG EINES DIBLOCKCOPOLYMERS**
METHOD FOR PRODUCING A DIBLOCK COPOLYMER
PROCEDE DE FABRICATION D'UN COPOLYMERE DIBLOC

(30) Priorität: 22.02.2016 EP 16156674
(43) Veröffentlichungstag der Anmeldung: 02.01.2019
(73) Patentinhaber: BASF SE, 67056 Ludwigshafen am Rhein (DE)
(72) Erfinder: PRISSOK, Frank, 49448 Lemförde (DE); PÖSELT, Elmar, 49448 Lemförde (DE); KEMPFERT, Dirk, 49448 Lemförde (DE); PUCH, Florian, 49448 Lemförde (DE); SCHOEMER, Martina, 49448 Lemförde (DE)
(74) Vertreter: BASF IP Association
(86) Internationale Anmeldenummer: PCT/EP2017/053980
(87) Internationale Veröffentlichungsnummer: WO 2017/144492

(56) Entgegenhaltungen:
- EP-A1- 1 068 252
- WO-A1-2015/063062
- DE-C1- 10 123 002

## Beschreibung

Die vorliegende Erfindung betrifft ein Verfahren zur Herstellung eines Diblockcopolymers umfassend die Umsetzung mindestens eines aromatischen Polyesters mit einem Schmelzpunkt im Bereich von 160 bis 350°C und mindestens einem Polymerdiol mit einem Schmelzpunkt von kleiner 100°C bei einer Temperatur von größer 200°C unter Erhalt eines Gemischs (G-a); sowie die Umsetzung des Gemischs (G-a) mit mindestens einem Diisocyanat, wobei das Diisocyanat in einer molaren Menge von mindestens 0,9 bezogen auf die Alkoholgruppen der Polymerdiole eingesetzt wird. Weiter betrifft die vorliegende Erfindung Diblockcopolymere, erhalten oder erhältlich gemäß einem derartigen Verfahren sowie die Verwendung derartiger Diblockcopolymere zur Herstellung von Extrusions-, Spritzguss- und Pressartikel sowie Schäumen, Kabelummantelungen, Schläuchen, Profilen, Antriebsriemen, Fasern, Vliesen, Folien, Formteilen, Steckern, Gehäusen, Dämpfungselementen für Elektroindustrie, Automobilindustrie, Maschinenbau, 3D-Druck, Medizin und Konsumartikel.

Polymere auf Basis von thermoplastischen Polyurethanen (TPU) werden in verschiedenen Bereichen eingesetzt. Je nach Anwendung können die Eigenschaften des Polymers modifiziert werden. So werden beispielsweise thermoplastische Polyurethane modifiziert, indem zusätzliche Polyesterblöcke in das Polymer eingebaut werden. Diese werden als Hartphasen modifizierte thermoplastische Polyurethane (HMP-TPU) bezeichnet. Derartige Hartphasen modifizierte thermoplastische Polyurethane finden eine breite Anwendung im Spritzguss, da sie durch die gute Phasenseparation und die hochkristalline Hartphase sehr kurze Zykluszeiten ermöglichen. Sie werden durch Transesterifizierung von einem kurzen Polyester durch die Zugabe von einem kurzkettigen Diol und anschließender Zugabe von Isocyanat und Polyolen aufgebaut, sodass ein Triblockcopolymer erhalten wird.

In EP 0 656 397 werden Triblockpolyadditionsprodukte mit TPU-Blöcken und Polyester-Blöcken offenbart, die aus zwei Hartphasenblöcken bestehen, nämlich der Polyester-Hartphase und der TPU-Hartphase, bestehend aus dem Urethanhartsegment, dem oligomeren oder polymeren Reaktionsprodukt aus einem organischen Diisocyanat und einem niedermolekularen Kettenverlängerungsmittel, vorzugsweise einem Alkandiol und/oder Dialkylenglykol und dem elastischen Urethan-Weichsegment, bestehend aus der höhermolekularen Polyhydroxylverbindung, vorzugsweise einem höhermolekularen Polyester- und/oder Polyetherdiol, die blockweise chemisch durch Urethan- und/oder Amidbindungen miteinander verknüpft sind. Die Urethan- oder Amidbindungen werden einerseits aus endständigen Hydroxyl- oder Carboxylgruppen der Polyester und andererseits aus endständigen Isocyanatgruppen des TPU gebildet. Die Reaktionsprodukte können auch weitere Bindungen wie beispielsweise Harnstoffbindungen, Allophanate, Isocyanurate und Biurete aufweisen.

WO 2015/063062 A1 offenbart thermoplastische Polyurethane erhältlich oder erhalten durch Umsetzung von mindestens einem aliphatischen Polyisocyanat, mindestens einem Kettenverlängerer und mindestens einer Polyolzusammensetzung, wobei die Polyolzusammensetzung ein Polyol ausgewählt aus der Gruppe bestehend aus Polyetherolen und mindestens ein Bisphenol-Derivat umfasst, sowie Verfahren zur Herstellung derartiger thermoplastischer Polyurethane und die Verwendung eines erfindungsgemäßen thermoplastischen Polyurethans zur Herstellung von Extrusionsprodukten, Folien und Formkörpern.

EP 1 068 252 A1 offenbart die kontinuierliche Herstellung eines Polyurethans aus einem aromatischen Polyester, einem Glykol und 4,4'-MDI. Der aromatische Polyester wird in einem ersten, separaten Schritt hergestellt.

DE 101 23 002 C1 offenbart die Herstellung eines Polyurethanhartschaums aus einem aromatischen Polyesterpolyol, Butandiol, einem Propylenoxidpolyol sowie weiteren Vernetzern, Katalysatoren und Additiven.

In EP 1 693 394 werden thermoplastische Polyurethane mit Polyesterblöcken sowie Verfahren zu deren Herstellung offenbart. Dabei werden thermoplastische Polyester mit einem Diol umgesetzt und anschließend das dabei erhaltene Umsetzungsprodukt mit Isocyanaten umgesetzt.

Die aus dem Stand der Technik bekannten Hartphasen modifizierten thermoplastischen Polyurethane haben den Nachteil, dass bei den bekannten Herstellungsverfahren ein gewisser Anteil des eingesetzten Diols mit dem Isocyanat reagieren kann. Dies führt zu einer statistisch verteilten Urethan-Hartphase, die die aus dem Polyester gebildete Hartphase hinsichtlich des Kristallisationsverhaltens beeinflusst und die Weichphase in ihrer Beständigkeit stört. Frei in der Weichphase liegende Urethanbindungen besitzen eine geringere Temperaturbeständigkeit, neigen zur Lösung in der Weichphase und zu irreversiblen Spaltungen und somit zu einem Abbau des Polymeren.

Somit war es eine Aufgabe der vorliegenden Erfindung, ein Polymer sowie ein Verfahren zur Herstellung eines Polymers bereitzustellen, das bessere Tief- und Hochtemperatureigenschaften als Produkte mit Urethanhartphasen besitzt. Eine weitere Aufgabe der vorliegenden Erfindung war es, ein Polymer sowie ein Verfahren zur Herstellung eines Polymers bereitzustellen, das eine verbesserte Hydrolysebeständigkeit aufweist. Darüber hinaus war es eine Aufgabe der vorliegenden Erfindung, Polymere bereitzustellen, die verbesserte Zykluszeiten und eine verbesserte Phasentrennung aufweisen.

Erfindungsgemäß wird diese Aufgabe gelöst durch ein Verfahren zur Herstellung eines Diblockcopolymers umfassend die Schritte
(a) Umsetzung mindestens eines aromatischen Polyesters mit einem Schmelzpunkt im Bereich von 160 bis 350°C und mindestens einem Polymerdiol mit einem Schmelzpunkt von kleiner 100°C bei einer Temperatur von größer 200°C unter Erhalt eines Gemischs (G-a);
(b) Umsetzung des Gemischs (G-a) mit mindestens einem Diisocyanat,
wobei das Diisocyanat in einer molaren Menge von mindestens 0,9 bezogen auf die Alkoholgruppen der Polymerdiole eingesetzt wird,
wobei der aromatische Polyester ausgewählt ist aus der Gruppe bestehend aus Polybutylenterephthalat (PBT), Polyethylenterephthalat (PET) und Polyethylennaphtalat (PEN).

Im Rahmen der vorliegenden Erfindung werden die Schmelzpunkte bzw. Schmelzbereiche soweit nicht anders angegeben mittels DSC bestimmt. Soweit nicht anders angegeben wird die DSC Messung mit einer Heizrate von 20°C/min in einem Temperaturbereich von 70°C bis 250°C durchgeführt. Die Haltezeit bei 250°C beträgt 2 Minuten, die Kühlrate im Kühllauf beträgt soweit nicht anders angegeben 20°C/min.

Mit dem erfindungsgemäßen Verfahren werden Diblockcopolymere aus einem hochschmelzenden Polyester und einem Polymerdiol und anschließender Umsetzung mit Diisocyanaten erhalten, ohne dass es zu der Bildung einer Urethanhartphase kommt, die sich negativ auf die Phasentrennung der kristallinen Polyester und der amorphen Polymerdiolphase auswirkt.

Das erfindungsgemäß erhalten zweiphasige Blockcopolymer enthält typischerweise kristalline Esterblöcke und amorphe Polyolblöcke, die über Amid-, Ester- und / oder Urethanbindungen gekoppelt sind. Dabei befindet sich erfindungsgemäß vorzugsweise keine Urethanhartphase in der Weichphase.

Erfindungsgemäß werden keine kurzkettigen Diole als zusätzliche Kettenverlängerer eingesetzt, so dass der Blockaufbau nicht gestört wird. Weiter werden im erfindungsgemäßen Verfahren keine Dicarbonsäuren zur Kopplung der Polydiole eingesetzt.

Eine wichtige Voraussetzung für ein mechanisch und chemisch stabiles Blockcopolymer mit einer guten Temperaturbeständigkeit ist neben einer klaren Phasentrennung eine ausreichende Blockgröße der Hart- und Weichphasen, die einen breiten Temperaturbereich für die Anwendung sicherstellen. Dieser Anwendungsbereich kann mittels DMA (Temperaturbereich zwischen Glasübergang der Weichphase und erstem Erweichen der Hartphase) detektiert werden.

Neben guten Tieftemperatur- und Hochtemperatur-Eigenschaften weisen die mit dem erfindungsgemäßen Verfahren erhaltenen Produkte eine gute Langzeitstabilität auf. Auch die mechanischen Eigenschaften der Diblockcopolymere wie Zugfestigkeit, Bruchdehnung und Abriebsbeständigkeit sind im Vergleich zu Produkten, die auch eine Urethan-Hartphase in der Weichphase enthalten, verbessert.

Das erfindungsgemäße Verfahren umfasst die Schritte (a) und (b). Gemäß Schritt (a) wird mindestens ein aromatischer Polyester mit einem Schmelzpunkt im Bereich von 160 bis 350°C, vorzugsweise mit einem Schmelzpunkt von größer 180°C mit mindestens einem Polymerdiol mit einem Schmelzpunkt von kleiner 100°C bei einer Temperatur von größer 200°C unter Erhalt eines Gemischs (G-a) umgesetzt.

Überraschenderweise wurde gefunden, dass eine Esterspaltung gemäß Schritt (a) nicht nur mit kurzkettigen, niederviskosen Diolen, sondern auch mit einem Polymerdiol möglich ist. Vorzugsweise wird das Polymerdiol unter den Reaktionsbedingungen gemäß Schritt (a) nicht umgeestert und bleibt vorzugsweise als Weichphasenbaustein komplett erhalten. Bei der Umesterung des Polyesters mit dem Polymerdiol entsteht aus den Polyester-Bruchstücken die Hartphase des Diblockcopolymeren und aus dem eingeesterten und weiterem Polymerdiol die Weichphase. Das erhaltene Produktgemisch ist das Gemisch (G-a).

Gemäß Schritt (b) des erfindungsgemäßen Verfahrens wird das des Gemisch (G-a) mit mindestens einem Diisocyanat umgesetzt. Dabei wird erfindungsgemäß ein Molekulargewichtsaufbau durch die Umsetzung mit dem Diisocyanat erreicht, dass mit den freien Säure- und Alkoholgruppen zu Amid- bzw. Urethangruppen reagiert und die Polymerketten verlängert. Erfindungsgemäß wird das Diisocyanat in einer molaren Menge von mindestens 0,9 bezogen auf die Alkoholgruppen der Polymerdiole eingesetzt wird.

Die Umsetzung gemäß Schritt (a) erfolgt vorzugsweise kontinuierlich. Gemäß einer weiteren Ausführungsform betrifft die vorliegende Erfindung demgemäß ein Verfahren zur Herstellung eines Diblockcopolymers wie zuvor beschrieben, wobei die Umsetzung gemäß Schritt (a) kontinuierlich erfolgt.

Gemäß Schritt (a) erfolgt die Umsetzung bei einer Temperatur von über 200°C. Die Umsetzung gemäß Schritt (b) erfolgt unter geeigneten Bedingungen, die eine Reaktion des Diisocyanats mit den freien Säure- und Alkoholgruppen erlauben. Die Umsetzung kann erfindungsgemäß in einer geeigneten Apparatur erfolgen, wobei dem Fachmann geeignete Verfahren an sich bekannt sind. Erfindungsgemäß ist es auch möglich, dass Zusatzstoffe oder Hilfsmittel eingesetzt werden, um die Umsetzung gemäß Schritt (a) oder (b) zu beschleunigen bzw. zu verbessern. Insbesondere können Katalysatoren eingesetzt werden.

Geeignete Katalysatoren für die Umsetzung gemäß Schritt (a) sind beispielsweise Tributylzinnoxid, Zinn(II)-Dioctoat, Dibutylzinndilaurat oder Bi(III)-Carboxylate.

Insbesondere kann die Umsetzung gemäß Schritt (a) oder die Umsetzung gemäß Schritt (b) oder die Umsetzung gemäß Schritt (a) und Schritt (b) in einem Extruder erfolgen.

Die Umsetzung gemäß Schritt (a) kann beispielsweise bei einer Temperatur im Bereich von 200 bis 310°C erfolgen, vorzugsweise im Bereich von 220 bis 300°C und insbesondere von 220 bis 280°C, weiter bevorzugt von 230 bis 260°C und einer Verweilzeit von 15 Sekunden bis 30 Minuten, vorzugsweise 20 Sekunden bis 10 Minuten in beispielsweise fließfähigem, erweichten oder vorzugsweise geschmolzenem Zustand der Polyesters und des Polymerdiols, insbesondere durch Rühren, Walzen, Kneten oder vorzugsweise Extrudieren, beispielsweise unter Verwendung von üblichen Plastifizierungsvorrichtungen, wie beispielsweise Mühlen, Knetern oder Extrudern, vorzugsweise in einem Extruder.

Gemäß einer weiteren Ausführungsform betrifft die vorliegende Erfindung demgemäß ein Verfahren zur Herstellung eines Diblockcopolymers wie zuvor beschrieben, wobei die Umsetzung gemäß Schritt (a) in einem Extruder erfolgt.

Das erfindungsgemäße Verfahren kann weitere Schritte umfassen, beispielsweise Temperaturanpassungen oder Formgebende Schritte.

Die Umsetzung gemäß Schritt (b) kann beispielsweise bei einer Temperatur im Bereich von 170 bis 260°C erfolgen, vorzugsweise im Bereich von 180 bis 240°C und insbesondere von 190 bis 230°C und einer Verweilzeit von 30 Sekunden bis 30 Minuten, vorzugsweise 1 bis 10 Minuten.

Gemäß einer weiteren Ausführungsform betrifft die vorliegende Erfindung demgemäß ein Verfahren zur Herstellung eines Diblockcopolymers wie zuvor beschrieben, wobei die Umsetzung gemäß Schritt (b) bei einer Temperatur im Bereich von 170 bis 260°C erfolgt.

Die erfindungsgemäß eingesetzten aromatischen Polyester weisen einen Schmelzpunkt im Bereich von 160 bis 350°C, vorzugsweise einen Schmelzpunkt von größer 180°C auf. Weiter bevorzugt weisen die erfindungsgemäß geeigneten Polyester einen Schmelzpunkt von größer 200°C auf, besonders bevorzugt einen Schmelzpunkt von größer 220°C. Demgemäß weisen die erfindungsgemäß geeigneten Polyester besonders bevorzugt einen Schmelzpunkt im Bereich von 220 bis 350°C auf.

Erfindungsgemäß geeignete Polyester sind ausgewählt aus der Gruppe bestehend aus Polybutylenterephthalat (PBT), Polyethylenterephthalat (PET) und Polyethylennaphtalat (PEN), so dass bevorzugt Polyethylenterephthalat und insbesondere bevorzugt Polybutylenterephthalat oder Mischungen aus Polyethylenterephthalat und Polybutylenterephthalat Anwendung finden.

Demgemäß betrifft die vorliegende Erfindung ein Verfahren zur Herstellung eines Diblockcopolymers wie zuvor beschrieben, wobei der aromatische Polyester ausgewählt ist aus der Gruppe bestehend aus Polybutylenterephthalat (PBT), Polyethylenterephthalat (PET) und Polyethylennaphtalat (PEN). Gemäß einer weiteren Ausführungsform betrifft die vorliegende Erfindung demgemäß ein Verfahren zur Herstellung eines Diblockcopolymers wie zuvor beschrieben, wobei der aromatische Polyester Polybutylenterephthalat (PBT) ist.

Geeignete Molekulargewichtsbereiche (Mn) des eingesetzten Polyesters liegen erfindungsgemäß im Bereich von 2000 bis 100000, besonders bevorzugt im Bereich von 10000 bis 50000.

Soweit nicht anders angegeben erfolgt im Rahmen der vorliegenden Erfindung die Bestimmung der gewichtsmittleren Molekulargewichte Mw der thermoplastischen Block-Copolymere, gelöst in HFIP (Hexafluorisopropanol) mittels GPC. Die Bestimmung des Molekulargewichts erfolgt mittels zwei hintereinandergeschalteter GPC-Säulen (PSS-Gel; 100A; 5µ; 300*8mm, Jordi- Gel DVB; MixedBed; 5µ; 250*10mm; Säulentemperatur 60°C; Fluss 1 mL/min; RI-Detektor). Dabei erfolgt die Kalibrierung mit Polymethylmethacrylat (EasyCal; Fa. PSS, Mainz), als Laufmittel wird HFIP verwendet.

Gemäß Schritt (a) wird der Polyester mit einem Polymerdiol mit einem Schmelzpunkt von kleiner 100°C unter Erhalt des Gemischs (G-a) umgesetzt. Geeignete Polymerdiole sind dem Fachmann an sich bekannt.

Geeignete Polymerdiole sind beispielsweise ausgewählt aus der Gruppe bestehend aus Polyetherolen, Polyesterolen, Polycarbonatalkoholen, Hybridpolyolen und Polysiloxanen.

Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden Polyesterole oder Polyetherole als Polyole eingesetzt. Besonders bevorzugt sind Polyeterpolyole. Das zahlenmittlere Molekulargewicht der erfindungsgemäß eingesetzten Polyole liegen vorzugsweise zwischen 500 g/mol und 3000 g/mol, bevorzugt zwischen 600 g/mol und 2500 g/mol, insbesondere zwischen 650 g/mol und 2000 g/mol.

Bevorzugte Polyetherole sind erfindungsgemäß Polyethyleneglykole, Polypropylenglykole und Polytetrahydrofurane.

Gemäß einer besonders bevorzugten Ausführungsform ist das Polymerdiol ein Polytetrahydrofuran (PTHF) mit einem Molekulargewicht im Mn Bereich von 500 g/mol bis 3000 g/mol.

Erfindungsgemäß sind neben PTHF auch andere weitere Polyether geeignet, oder auch Polyester.

Gemäß einer weiteren Ausführungsform betrifft die vorliegende Erfindung demgemäß ein Verfahren zur Herstellung eines Diblockcopolymers wie zuvor beschrieben, wobei das Polymerdiol ein Polyetherdiol ist. Gemäß einer anderen Ausführungsform betrifft die vorliegende Erfindung auch ein Verfahren zur Herstellung eines Diblockcopolymers wie zuvor beschrieben, wobei das Polymerdiol ein Polytetrahydrofuran ist.

Erfindungsgemäß kann das Polyol in reiner Form oder in Form einer Zusammensetzung enthaltend das Polyol und mindestens ein Lösungsmittel eingesetzt werden. Geeignete Lösungsmittel sind dem Fachmann an sich bekannt.

Im Rahmen der vorliegenden Erfindung kann das Verhältnis des Polyesters und des Polyols in weiten Bereichen variieren. Erfindungsgemäß können der Polyester und das Polyol beispielsweise im Verhältnis 90:10 bis 10:90 Gewichtsteilen bezogen auf den Polyester verwendet werden.

Im Rahmen der vorliegenden Erfindung können bei der Umsetzung auch Zusatzstoffe oder Hilfsmittel eingesetzt werden, beispielsweise Antioxidantien, UV-Absorber, UV-Filter, Hydrolyseschutzmittel, Wachse, Gleitmittel, Weichmacher, Verarbeitungshilfsmittel, Nukleierungsmittel, Füllstoffe, Flammschutzmittel.

Gemäß Schritt (a) wird ein Gemisch (G-a) erhalten, das neben dem Umsetzungsprodukt auch nicht umgesetzten Polyester oder nicht umgesetztes Polymerdiol enthalten kann. Das Umsetzungsprodukt liegt dabei erfindungsgemäß als Gemisch vor, wobei die einzelnen Moleküle beispielsweise in der Verteilung sowie der Länge der Polyester-Blöcke verschieden sein können.

Gemäß Schritt (b) des erfindungsgemäßen Verfahrens wird das in Schritt (a) erhaltene Gemisch (G-a) mit mindestens einem Diisocyanat umgesetzt, wobei das Diisocyanat in einer molaren Menge von mindestens 0,9 bezogen auf die Alkoholgruppen der Polymerdiole eingesetzt wird.

Erfindungsgemäß wird mindestens ein Diisocyanat eingesetzt. Erfindungsgemäß können auch Mischungen aus zwei oder mehr Diisocyanaten eingesetzt werden. Bevorzugte Diisocyanate sind im Rahmen der vorliegenden Erfindung insbesondere aliphatische oder aromatische Diisocyanate.

Des Weiteren können im Rahmen der vorliegenden Erfindung vorreagierte Prepolymere als Isocyanatkomponenten eingesetzt werden, bei denen ein Teil der OH-Komponenten in einem vorgelagerten Reaktionsschritt mit einem Isocyanat zur Reaktion gebracht werden. Diese Prepolymere werden in einem nachfolgenden Schritt, der eigentlichen Polymerreaktion, mit den restlichen OH-Komponenten zur Reaktion gebracht und bilden dann das thermoplastische Polyurethan. Die Verwendung von Prepolymeren bietet die Möglichkeit, auch OH-Komponenten mit sekundären Alkoholgruppen zu verwenden.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-lsocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'- und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI); insbesondere bevorzugt sind 4,4'-, 2,4'- und/oder 2,2'-Methylendicyclohexyldiisocyanat (H12MDI) und 1-Isocyanato-3,3,5-trimethyl-5-isocyanatomethyl-cyclohexan oder Mischungen davon.

Demgemäß betrifft die vorliegende Erfindung gemäß einer weiteren Ausführungsform ein wie zuvor beschriebenes Verfahren, wobei das Polyisocyanat ausgewählt ist aus der Gruppe bestehend aus 4,4'-, 2,4'- und/oder 2,2'-Methylendicyclohexyldiisocyanat (H12MDI), Hexamethylendiisocyanat (HDI) und 1-lsocyanato-3,3,5-trimethyl-5-isocyanatomethyl-cyclohexan (IPDI) oder Mischungen davon.

Geeignete aromatische Diisocyanate sind insbesondere 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3,'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethandiisocyanat und/oder Phenylendiisocyanat.

Bevorzugte aromatische Diisocyanate sind 2,2'-, 2,4'- und/oder 4,4'-Diphenylmethandiisocyanat (MDI) und deren Mischungen.

Bevorzugt ist erfindungsgemäß das Diisocyanat ausgewählt aus der Gruppe bestehend aus 2,2'-, 2,4'- und/oder 4,4'-Diphenylmethandiisocyanat (MDI), 2,4- und/oder 2,6-Toluylendiisocyanat (TDI), 4,4'-, 2,4'- und/oder 2,2'-Methylendicyclohexyldiisocyanat (H12MDI), Hexamethylendiisocyanat (HDI) und 1-lsocyanato-3,3,5-trimethyl-5-isocyanatomethylcyclohexan (IPDI).

Gemäß einer weiteren Ausführungsform betrifft die vorliegende Erfindung demgemäß ein Verfahren zur Herstellung eines Diblockcopolymers wie zuvor beschrieben, wobei das Diisocyanat ausgewählt ist aus der Gruppe bestehend aus 2,2'-, 2,4'- und/oder 4,4'-Diphenylmethandiisocyanat (MDI), 2,4- und/oder 2,6-Toluylendiisocyanat (TDI), 4,4'-, 2,4'- und/oder 2,2'-Methylendicyclohexyldiisocyanat (H12MDI), Hexamethylendiisocyanat (HDI) und 1-lsocyanato-3,3,5-trimethyl-5-isocyanatomethyl-cyclohexan (IPDI).

Erfindungsgemäß kann das Diisocyanat in reiner Form oder in Form einer Zusammensetzung enthaltend das Diisocyanat und mindestens ein Lösungsmittel eingesetzt werden. Geeignete Lösungsmittel sind dem Fachmann bekannt. Geeignet sind beispielsweise nicht reaktive Lösungsmittel wie Ethylacetat, Methylethylketon, Tetrahydrofuran und Kohlenwasserstoffe.

Erfindungsgemäß können bei der Umsetzung gemäß Schritt (b) weitere Einsatzstoffe zugesetzt werden, beispielsweise Katalysatoren oder Hilfs- und Zusatzstoffe.

Geeignete Hilfs- und Zusatzstoffe sind dem Fachmann an sich bekannt. Genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Geeignete Katalysatoren sind ebenfalls grundsätzlich aus dem Stand der Technik bekannt. Geeignete Katalysatoren sind beispielsweise organische Metallverbindungen ausgewählt aus der Gruppe bestehend aus Zinn-, Titan-, Zirkonium-, Hafnium-, Bismut-, Zink-, Aluminium- und Eisenorganylen, wie beispielsweise Zinnorganylverbindungen, bevorzugt Zinndialkyle wie Zinn-II-isooctoat, Zinndioctoat, Dimethylzinn oder Diethylzinn, oder Zinnorganylverbindungen aliphatischer Carbonsäuren, bevorzugt Zinndiacetat, Zinndilaurat, Dibutylzinndiacetat, Dibutylzinndilaurat, Titansäureester, Bismuthverbindungen, wie Bismuthalkylverbindungen, bevorzugt Bismuthneodecanoat oder ähnliche, oder Eisenverbindungen, bevorzugt Eisen-(III)-acetylacetonat. Gemäß einer bevorzugten Ausführungsform werden die Katalysatoren ausgewählt aus Zinnverbindungen und Bismuthverbindungen, weiter bevorzugt Zinnalkylverbindungen oder Bismuthalkylverbindungen. Besonders geeignet sind die Zinn-II-isooctoat und Bismuthneodecanoat.

Die Katalysatoren werden üblicherweise in Mengen von 3 ppm bis 2000 ppm, bevorzugt 10 ppm bis 1200 ppm, weiter bevorzugt 20 ppm bis 1000 ppm und am meisten bevorzugt von 30 ppm bis 800 ppm eingesetzt.

Der Molekulargewichtsaufbau gemäß Schritt (b) erfolgt über eine Reaktion der IsocyanatGruppen mit freien Säure- bzw. Hydroxygruppen. Erfindungsgemäß werden bei der Umsetzung gemäß Schritt (b) keine weiteren Aufbaukomponenten eingesetzt.

Insbesondere werden im erfindungsgemäßen Verfahren bei der Umsetzung gemäß Schritt (a) keine kurzkettigen Diole eingesetzt. Weiterhin werden vorzugsweise bei der Umsetzung gemäß Schritt (a) keine Dicarbonsäuren eingesetzt.

Gemäß einer weiteren Ausführungsform betrifft die vorliegende Erfindung demgemäß ein Verfahren zur Herstellung eines Diblockcopolymers wie zuvor beschrieben, wobei bei der Umsetzung gemäß Schritt (a) keine kurzkettigen Diole eingesetzt werden.

Gemäß einer weiteren Ausführungsform betrifft die vorliegende Erfindung demgemäß ein Verfahren zur Herstellung eines Diblockcopolymers wie zuvor beschrieben, wobei bei der Umsetzung gemäß Schritt (a) keine Dicarbonsäuren eingesetzt werden.

Die vorliegende Erfindung betrifft gemäß einem weiteren Aspekt auch ein Diblockcopolymer, erhalten oder erhältlich gemäß einem erfindungsgemäßen Verfahren.

Die erfindungsgemäßen Diblockcopolymere weisen üblicherweise eine Hartphase aus aromatischen Polyester und eine Weichphasen aus Polymerdiolen auf. Vorzugsweise ist die Weichphasen aus Polymerdiolen eine Weichphase aus Polyetherdiolen, besonders bevorzugt aus PTHF. Weiter bevorzugt hat der Weichphasenstrang ein Molekulargewicht von größer 500g/mol.

Der Weichphasenschmelzpunkt (Glasübergang) der erfindungsgemäßen Diblockcopolymere ist üblicherweise kleiner als 10°C, vorzugsweise kleiner als -20°C und besonders bevorzugt kleiner als -30°C.

Die Verarbeitung der erhaltenen Diblockcopolymere kann gemäß üblichen Verfahren erfolgen, beispielsweise auf Extrudern, Spritzgussmaschinen, Kalandern, Knetern und Pressen.

Aufgrund der guten mechanischen Eigenschaften und des guten Temperaturverhaltens sind die erfindungsgemäßen Diblockcopolymere insbesondere zur Herstellung von Extrusions-, Spritzguss- und Pressartikel sowie Schäumen, Kabelummantelungen, Schläuchen, Profilen, Antriebsriemen, Fasern, Vliesen, Folien, Formteilen, Steckern, Gehäusen, Dämpfungselementen für Elektroindustrie, Automobilindustrie, Maschinenbau, 3D-Druck, Medizin und Konsumartikel geeignet.

Gemäß einem weiteren Aspekt betrifft die vorliegende Erfindung auch die Verwendung eines erfindungsgemäßen Diblockcopolymers oder eines Diblockcopolymers, erhalten oder erhältlich nach einem erfindungsgemäßen Verfahren zur Herstellung von Extrusions-, Spritzguss- und Pressartikel sowie Schäumen, Kabelummantelungen, Schläuchen, Profilen, Antriebsriemen, Fasern, Vliesen, Folien, Formteilen, Steckern, Gehäusen, Dämpfungselementen für Elektroindustrie, Automobilindustrie, Maschinenbau, 3D-Druck, Medizin und Konsumartikel.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Folgende Einsatzstoffe wurden eingesetzt:

| | |
|---|---|
| Polyol 1: | Polybutylenterephthalat (PBT) mit einem gewichtsmittleren Molekulargewicht von 60000 g/mol |
| Polyol 2: | Polyetherpolyol mit einer OH- Zahl von 174,7 und ausschließlich primären OH- Gruppen (basierend auf Tetramethylenoxid, Funktionalität: 2) |
| Polyol 3: | Polyetherpolyol mit einer OH- Zahl von 112,2 und ausschließlich primären OH- Gruppen (basierend auf Tetramethylenoxid, Funktionalität: 2) |
| Polyol 4: | Mischung aus Polyol 3 53,33% und Polyol 5 46,67% |
| Polyol 5: | Polyetherpolyol mit einer OH- Zahl von 55,8 und ausschließlich primären OH- Gruppen (basierend auf Tetramethylenoxid, Funktionalität: 2) |
| Polyol 6: | Polyesterpolyol mit einer OH-Zahl von 45,5 und ausschließlich primären OH- Gruppen (basierend auf Butandiol und Adipinsäure, Funktionalität: 2) |
| Isocyanat 1: | aromatisches Isocyanat (4,4' Methylendiphenyldiisocyanat) |
| Isocyanat 2: | aliphatisches Isocyanat (1,6-Hexamethylendiisocyanat) |
| Katalysator 1: | Zinn-II-Dioctoat (10 %ig in Dioktyladipat) |
| Antioxidans: | sterisch gehindertes Phenol |
| Hydrolyse-Stabilisator 1: | Polymeres Carbodiimid |
| Hydrolyse-Stabilisator 2: | epoxidiertes Sojaöl |

### 2. Beispiel für kontinuierliche Synthese

In das erste Gehäuse eines Zweiwellenextruders, ZSK58 der Fa. Coperion mit einer Verfahrenslänge von 48D, wird der Polyester (PBT) zugeführt. Nach dem Schmelzen des Polyesters wird im Gehäuse 3 das Polyol, sowie ggf. der darin enthaltene Katalysator hinzugefügt. Bei Gehäusetemperaturen von 250 - 300°C erfolgt die Umesterung, bevor im fünften Gehäuse das Diisocyanat zur Reaktionsmischung gegeben wird. Stromabwärts erfolgt der Molmassenaufbau bei Gehäusetemperaturen von 190 - 230 °C. Im Anschluss an die Synthese wird das erhaltene Polymer Unterwasser- oder Stranggranuliert und anschließend getrocknet.

Die eingesetzten Mengen sind in den Tabellen 1 und 2 zusammengefasst.

**Tabelle 1: Beispiele zu Synthese:**

| | **Beispiel 1** | **Beispiel 2** | **Beispiel 3** | **Beispiel 4** | **Beispiel 5** | **Beispiel 6** |
|---|---|---|---|---|---|---|
| Polyol 1 [Teile] | 60 | 60 | 60 | 60 | 60 | 60 |
| Polyol 2 [Teile] | 12 | 12 | 12 | 24 | 24 | 36 |
| Iso 1 [Teile] | 4,62 | 4,71 | 4,81 | 9,24 | 9,43 | 13,86 |

**Tabelle 2: Beispiele zu Synthese:**

| | **Beispiel 7** | **Beispiel 8** | **Beispiel 9** | **Beispiel 10** |
|---|---|---|---|---|
| Polyol 1 [Teile] | 60 | 60 | 60 | 60 |
| Polyol 2 [Teile] | | 36 | 36 | |
| Polyol 3 [Teile] | 36 | | | |
| Polyol 4 [Teile] | | | | 36 |
| Polyol 5 [Teile] | | | | |
| Iso 1 [Teile] | 9,19 | | 14,61 | 7,03 |
| Iso 2 [Teile] | | 9,14 | | |
| UV Stabi 1 | | | 1 | |
| Hydrolyse-Stab. 1 | | | 1 | |
| Hydrolyse-Stab. 2 | | | 0,5 | |

Die Eigenschaften der thermoplastischen Polyurethane, die durch die kontinuierliche Synthese hergestellt wurden, sind in Tabelle 3 und Tabelle 4 zusammengefasst.

**Tabelle 3: Beispiele zu Eigenschaften:**

| | **Beispiel 1** | **Beispiel 2** | **Beispiel 3** | **Beispiel 4** | **Beispiel 5** | **Beispiel 6** |
|---|---|---|---|---|---|---|
| Shore D | 70 | 69 | 70 | 59 | 62 | 49 |
| E-Modul [MPa] | | | | | | |
| Zugfestigkeit [MPa] | 45 | 43 | 45 | 30 | 33 | 66 |
| Reißdehnung [%] | 460 | 460 | 430 | 720 | 480 | 620 |
| Weiterreißwiderstand [kN/m] | 196 | 192 | 204 | 135 | 160 | 127 |
| Druckverformungsrest (72h/23°C/30min) [%] | 22 | 25 | 24 | 23 | 23 | 21 |
| Druckverform ungsrest (24h/70°C/30min) [%] | 47 | 43 | 47 | 46 | 47 | 44 |
| Druckverform ungsrest (24h/100°C/30min) [%] | 40 | 46 | 49 | 45 | 49 | 42 |
| Abrieb [mm³] | 30 | 26 | 26 | 19 | 17 | 19 |
| TMA Onset Temperatur (ΔT 20 °C/Min) [°C] | 199 | 199 | 198 | 182 | 178 | 164 |

**Tabelle 4: Beispiele zu Eigenschaften:**

| | **Beispiel 7** | **Beispiel 8** | **Beispiel 9** | **Beispiel 10** |
|---|---|---|---|---|
| Shore D | 50 | 47 | 48 | 49 |
| E-Modul [MPa] | | | | |
| Zugfestigkeit [MPa] | 31 | 28 | 34 | 37 |
| Reißdehnung [%] | 630 | 620 | 580 | 640 |
| Weiterreißwiderstand [kN/m] | 113 | 98 | 117 | 111 |
| Druckverformungsrest (72h/23°C/30min) [%] | | | | |
| Druckverformungsrest (24h/70°C/30min) [%] | | | | |
| Druckverformungsrest (24h/100°C/30min) [%] | | | | |
| Abrieb [mm³] | 22 | 21 | 24 | 32 |
| TMA Onset Temperatur (ΔT 20 °C/Min) [°C] | | | | |

### 3. Messmethoden:

Für die Materialcharakterisierung können u.a. folgende Messmethoden genutzt werden: DSC, DMA, TMA, NMR, FT-IR, GPC, Berstdruckmessung

| | |
|---|---|
| Shore-Härte D | DIN 7619-1 |
| E-Modul | DIN 53 504 |
| | |
| Zugfestigkeit | DIN 53 504 |
| Reißdehnung | DIN 53504 |
| Weiterreißfestigkeit | DIN ISO 34-1, B |
| Abrieb | DIN 4649 |
| Druckverformungsrest | DIN ISO 815 |
| Kriechverhalten | DIN EN ISO 899-1 |

## Patentansprüche

1. Verfahren zur Herstellung eines Diblockcopolymers umfassend die Schritte
(a) Umsetzung mindestens eines aromatischen Polyesters mit einem Schmelzpunkt im Bereich von 160 bis 350°C und mindestens einem Polymerdiol mit einem Schmelzpunkt von kleiner 100°C bei einer Temperatur von größer 200°C unter Erhalt eines Gemischs (G-a);
(b) Umsetzung des Gemischs (G-a) mit mindestens einem Diisocyanat,
wobei das Diisocyanat in einer molaren Menge von mindestens 0,9 bezogen auf die Alkoholgruppen der Polymerdiole eingesetzt wird,
wobei der aromatische Polyester ausgewählt ist aus der Gruppe bestehend aus Polybutylenterephthalat (PBT), Polyethylenterephthalat (PET) und Polyethylennaphtalat (PEN).

2. Verfahren gemäß Anspruch 1, wobei die Umsetzung gemäß Schritt (a) kontinuierlich erfolgt.

3. Verfahren gemäß Anspruch 1 oder 2, wobei die Umsetzung gemäß Schritt (a) in einem Extruder erfolgt.

4. Verfahren gemäß einem der Ansprüche 1 bis 3, wobei die Umsetzung gemäß Schritt (b) bei einer Temperatur im Bereich von 170 bis 260°C erfolgt.

5. Verfahren gemäß einem der Ansprüche 1 bis 4, wobei das Diisocyanat ausgewählt ist aus der Gruppe bestehend aus 2,2'-, 2,4'- und/oder 4,4'-Diphenylmethandiisocyanat (MDI), 2,4- und/oder 2,6-Toluylendiisocyanat (TDI), 4,4'-, 2,4'- und/oder 2,2'-Methylendicyclohexyldiisocyanat (H12MDI), Hexamethylendiisocyanat (HDI) und 1-Isocyanato-3,3,5-trimethyl-5-isocyanatomethyl-cyclohexan (IPDI).

6. Verfahren gemäß einem der Ansprüche 1 bis5, wobei das Polymerdiol ein Polyetherdiol ist.

7. Verfahren gemäß einem der Ansprüche 1 bis 6, wobei das Polymerdiol ein Polytetrahydrofuran ist.

8. Verfahren gemäß einem der Ansprüche 1 bis 7, wobei bei der Umsetzung gemäß Schritt (a) keine kurzkettigen Diole eingesetzt werden.

9. Verfahren gemäß einem der Ansprüche 1 bis 8, wobei bei der Umsetzung gemäß Schritt (a) keine Dicarbonsäuren eingesetzt werden.

10. Diblockcopolymer, erhalten oder erhältlich gemäß einem Verfahren nach einem der Ansprüche 1 bis 9.

11. Verwendung eines Diblockcopolymers gemäß Anspruch 10 oder eines Diblockcopolymers, erhalten oder erhältlich gemäß einem Verfahren nach einem der Ansprüche 1 bis 9 zur Herstellung von Extrusions-, Spritzguss- und Pressartikel sowie Schäumen, Kabelummantelungen, Schläuchen, Profilen, Antriebsriemen, Fasern, Vliesen, Folien, Formteilen, Steckern, Gehäusen, Dämpfungselementen für Elektroindustrie, Automobilindustrie, Maschinenbau, 3D-Druck, Medizin und Konsumartikel.

## Claims

1. A process for producing a diblock copolymer comprising the steps of
(a) reaction of at least one aromatic polyester having a melting point in the range from 160°C to 350°C and at least one polymer diol having a melting point of less than 100°C at a temperature of greater than 200°C to obtain a mixture (G-a);
(b) reaction of the mixture (G-a) with at least one diisocyanate,
wherein the diisocyanate is employed in a molar amount of at least 0.9 based on the alcohol groups of the polymer diols,
wherein the aromatic polyester is selected from the group consisting of polybutylene terephthalate (PBT), polyethylene terephthalate (PET) and polyethylene naphthalate (PEN).

2. The process according to claim 1, wherein the reaction according to step (a) is effected in continuous fashion.

3. The process according to claim 1 or 2, wherein the reaction according to step (a) is effected in an extruder.

4. The process according to any of claims 1 to 3, wherein the reaction according to step (b) is effected at a temperature in the range from 170°C to 260°C.

5. The process according to any of claims 1 to 4, wherein the diisocyanate is selected from the group consisting of 2,2'-, 2,4'- and/or 4,4'-diphenylmethanediisocyanate (MDI), 2,4- and/or 2,6-tolylenediisocyanate (TDI), 4,4'-, 2,4'- and/or 2,2'-methylenedicyclohexyldiisocyanate (H12MDI), hexamethylenediisocyanate (HDI) and 1-isocyanato-3,3,5-trimethyl-5-isocyanatomethylcyclohexane (IPDI) .

6. The process according to any of claims 1 to 5, wherein the polymer diol is a polyether diol.

7. The process according to any of claims 1 to 6, wherein the polymer diol is a polytetrahydrofuran.

8. The process according to any of claims 1 to 7, wherein no short-chain diols are employed in the reaction according to step (a).

9. The process according to any of claims 1 to 8, wherein no dicarboxylic acids are employed in the reaction according to step (a).

10. A diblock copolymer obtained or obtainable by a process according to any of claims 1 to 9.

11. The use of a diblock copolymer according to claim 10 or of a diblock copolymer obtained or obtainable by a process according to any of claims 1 to 9 for producing extruded, injection molded and pressed articles and also foams, cable sheaths, hoses, profiles, drive belts, fibers, nonwovens, films, moldings, plugs, housings, damping elements for the electricals industry, automotive industry, mechanical engineering, 3-D printing, medicine and consumer goods.

## Revendications

1. Procédé pour la préparation d'un copolymère dibloc comprenant les étapes de
(a) transformation d'au moins un polyester aromatique doté d'un point de fusion dans la plage de 160 à 350 °C et d'au moins un diol polymérique doté d'un point de fusion inférieur à 100 °C à une température supérieure à 200 °C avec obtention d'un mélange (G-a) ;
(b) transformation du mélange (G-a) avec au moins un diisocyanate,
le diisocyanate étant utilisé en une quantité molaire d'au moins 0,9 par rapport aux groupes alcool des diols polymériques,
le polyester aromatique étant choisi dans le groupe constitué par un poly(téréphtalate de butylène) (PBT), un poly(téréphtalate d'éthylène) (PET) et un poly(naphtalate d'éthylène) (PEN).

2. Procédé selon la revendication 1, la transformation selon l'étape (a) étant réalisée en continu.

3. Procédé selon la revendication 1 ou 2, la transformation selon l'étape (a) étant réalisée dans une extrudeuse.

4. Procédé selon l'une quelconque des revendications 1 à 3, la transformation selon l'étape (b) étant réalisée à une température dans la plage de 170 à 260 °C.

5. Procédé selon l'une quelconque des revendications 1 à 4, le diisocyanate étant choisi dans le groupe constitué par le 2,2'-diisocyanate de diphénylméthane, le 2,4'-diisocyanate de diphénylméthane et/ou le 4,4'-diisocyanate de diphénylméthane (MDI), le 2,4-diisocyanate de toluylène et/ou le 2,6-diisocyanate de toluylène (TDI), le 4,4'-diisocyanate de dicyclohexylméthylène, le 2,4'-diisocyanate de dicyclohexylméthylène et/ou le 2,2'-diisocyanate de dicyclohexylméthylène (H12MDI), le diisocyanate d'hexaméthylène (HDI) et le 1-isocyanato-3,3,5-triméthyl-5-isocyanatométhyl-cyclohexane (IPDI).

6. Procédé selon l'une quelconque des revendications 1 à 5, le diol polymérique étant un polyétherdiol.

7. Procédé selon l'une quelconque des revendications 1 à 6, le diol polymérique étant un polytétrahydrofuranne.

8. Procédé selon l'une quelconque des revendications 1 à 7, aucun diol à chaîne courte n'étant utilisé lors de la transformation selon l'étape (a).

9. Procédé selon l'une quelconque des revendications 1 à 8, aucun acide dicarboxylique n'étant utilisé lors de la transformation selon l'étape (a).

10. Copolymère dibloc obtenu ou pouvant être obtenu par un procédé selon l'une quelconque des revendications 1 à 9.

11. Utilisation d'un copolymère dibloc selon la revendication 10 ou d'un copolymère dibloc obtenu ou pouvant être obtenu par un procédé selon l'une quelconque des revendications 1 à 9 pour la préparation d'articles d'extrusion, d'articles moulés par injection et d'articles pressés ainsi que de mousses, de gaines de câble, de tubes, de profilés, de courroies d'entraînement, de fibres, de non-tissés, de feuilles, de pièces moulées, de prises, de boîtiers, d'éléments d'isolation pour l'industrie électrique, l'industrie automobile, la construction de machines, l'impression 3D, la médecine et des articles de consommation.
